# EUROPÄISCHE PATENTSCHRIFT

(11) **EP 0 941 975 B1**
(45) Veröffentlichungstag und Bekanntmachung des Hinweises auf die Patenterteilung: **09.01.2002**
(21) Anmeldenummer: 99104346.4
(22) Anmeldetag: 04.03.1999
(51) Int. Cl.: C04B 28/02, C04B 24/12

(54) **Korrosionsinhibitoren enthaltender Injektionszement**
Injection cement containing corrosion inhibitors
Ciment d'injection contenant des inhibiteurs de corrosion

(30) Priorität: 09.03.1998 CH 56298
(43) Veröffentlichungstag der Anmeldung: 15.09.1999
(73) Patentinhaber: Sika AG, vorm. Kaspar Winkler & Co., CH-8048 Zürich (CH)
(72) Erfinder: Bürge, Theodor A., 8954 Geroldswil (CH); Wombacher, Franz, 8966 Oberwil-Lieli (CH)
(74) Vertreter: Blum, Rudolf Emil Ernst

(56) Entgegenhaltungen:
- EP-A- 0 635 463
- NL-A- 6 906 625

## Beschreibung

Die vorliegende Erfindung betrifft einen Injektionszement der insbesondere zur Abdichtung von Rissen im Beton und Mauerwerk geeignet ist und der gleichzeitig korrosionsinhibierend wirkt.

Die Verwendung von Zementleim zur Abdichtung von Rissen im Beton und im Mauerwerk hat sich seit mehr als 100 Jahren bewährt. Das breite Korngrössenspektrum von in Zementleim verwendetem Normalzement und der Wasserentzug aus daraus hergestellten, üblichen Suspensionen setzen jedoch der Anwendung bei Sanierung und Instandsetzung von Beton-Mauerwerken Grenzen. Zudem sind Suspensionen von Normalzement für die Stabilisierung von feinkörnigen Böden total ungeeignet. Während der hohe Anteil grober Zementkörner das Eindringen des Zementleims in enge Risse und Spalten behindert oder sogar verhindert, werden durch den Wasserentzug die für die Festigkeit entscheidenden Abbindereaktionen gestört oder unterbunden. Die Instandsetzung von Bauwerken, ob von historischer Bedeutung, vor einigen Jahrzehnten geschaffen, oder erst in jüngster Zeit erstellt, zählt zu den wichtigsten und zugleich zu den anspruchsvollsten Aufgaben eines Injektionsspezialisten. Um ein besseres Eindringen in die feinsten Risse und bis in weit unter der Oberfläche liegende Hohlräume zu ermöglichen, wurden mittels Injektion applizierbare Produkte entwickelt. Solche Injektionen können entweder von der Oberfläche her oder aber über im Bauwerk bereits verlegte perforierte Injektionsschläuche vorgenommen werden. Damit eine Injektion erfolgreich verläuft, sind lang anhaltend stabile Zusammensetzungen von Micro-Zement mit geeigneten Zusätzen notwendig, denn sie gewähren in der Flüssigkeitsphase den gewünschten Zusammenhalt der Suspension. Solche Injektionszemente sind beim Erstarren fähig, zu kraftschlüssigen Verbindungen bei gleicher Steifheit wie Beton oder Mörtel zu gelangen. Micro-Zemente haben eine Dichte von ca. 3,10 g/cm³ und einen Blainewert von 8'000 g/cm² bis 20'000 g/cm².

| Typische Korngrössenverteilung eines Micro-Zementes | |
|---|---|
| kleiner als 2 µm ca. | 25 % |
| kleiner als 4 µm ca. | 32 % |
| kleiner als 8 µm ca. | 20 % |
| kleiner als 16 µm ca. | 23 % |

| Typische Druckfestigkeitsentwicklung | |
|---|---|
| nach 1 Tag | ca. 40 N/mm² |
| nach 2 Tagen | ca. 50 N/mm² |
| nach 7 Tagen | ca. 60 N/mm² |
| nach 28 Tagen | ca. 65 N/mm² |

Obschon solche Injektionszemente einen bedeutenden Fortschritt gegenüber normalem Zementleim darstellen, ermöglicht ihr Einsatz keinen ausreichenden Korrosionsschutz. Zwar wird der Wasserzutritt zu den Armierungen stark vermindert, doch im Bauwerk verbleibende Feuchtigkeit sowie korrosionsfördernde Stoffe können weiterhin schädigend auf die Armierungen einwirken.

EP 0 247 773 offenbart das Einbringen von Korrosionsinhibitor, beispielsweise auf einem Trägermaterial, in eigens dafür angebrachte Bohrlöcher. Dieses Vorgehen hat den Nachteil, dass einerseits eine mechanische Bearbeitung des zu sanierenden Bauwerks notwendig wird, andererseits der Korrosionsinhibitor nicht direkt den infolge der Rissbildung am meisten gefährdeten Stellen zugeführt wird.

Aus EP 0 635 463 A1 ist bereits das Zumischen von Korrosionsinhibitoren zu normalem Zement bekannt. Dieser wird für die Erstellung armierter Bauwerke verwendet. Solche Zemente weisen aber die obengenannten Nachteile auf, die sie für das Versiegeln von Rissen und Füllen tiefliegender Hohlräume ungeeignet machen.

In NL 6 906 625 wird ein Beschichtungsmaterial beschrieben, dessen Bindemittel als Korrosionsinhibitor eine grosse Menge Zinkstaub zugemischt wird. Eine solche Zusammensetzung ist für die Sanierung von Bauwerken ungeeignet, da die Zumischung grosser Zinkstaub-MengendieZementeigenschaftbeeinflusst und zudem Zinkstaub nur ganz lokal eine Wirkung entfaltet.

Ziel der vorliegenden Erfindung war es deshalb ein Mittel zur Abdichtung von Rissen in Beton und in Mauerwerk bereitzustellen, welches einerseits gute Abdichtung auch feinster Risse und von Hohlräumen, die weit unter der Oberfläche liegen, gewährleistet und gleichzeitig einen nachhaltigen Korrosionsschutz bereitstellt.

Diese Aufgabe wurde gelöst durch Bereitstellen eines Injektionszements gemäss Anspruch 1, der neben einem Micro-Zement oder einer Mischung aus Micro-Zement und latenthydraulischen oder inerten Feinanteilen Korrosionsinhibitoren enthält, wobei die Korrosionsinhibitoren Aminoverbindungen und/oder Aminoalkohole umfassen. Spezielle Ausführungsformen sind den abhängigen Ansprüchen zu entnehmen. Zur Verbesserung der Pumpbarkeit können Verflüssiger, Hochleistungsverflüssiger oder Thixotropiermittel, zur Abbinderegulierung Beschleuniger oder Verzögerer und zur Schwindreduzierung Expansionsmittel zugegeben werden. Der für die Anwendung vorbereitete erfindungsgemässe Injektionszement ist ein ultrafeines, mineralisches Injektionsmittel, in dem Micro-Zement mit Wasser und den Zusatzmitteln hochtourig kolloidal aufgemischt wird. Diese Microsuspension ist im Stande durch ihr hervorragendes Penetrationsvermögen in die feinsten Porenräume und Fehlstellen der Baukonstruktion einzudringen, freiliegende Armierungen zu umschliessen und vor weiterer Korrosion zu schützen. Der Korrosionsinhibitor, welcher ganz oder teilweise neutralisierte Aminoverbindungen und/oder Aminoalkohole enthält, penetriert zudem in die Umgebung der Injektionsstelle, zieht auf die Armierungseisen auf und bildet dort einen Schutzfilm gegen erneute Korrosion.

Die Figur zeigt das Penetrationsverhalten eines. im Rahmen der vorliegenden Erfindung geeigneten Korrosionsinhibitors.

Der Injektionszement kann hergestellt werden, indem der Korrosionsinhibitor vor oder nach dem Mahlen des Zementes oder erst kurz vor der Verwendung des Injektionszementes zugemischt wird.

Für die Erfindung vorteilhafte Korrosionsinhibitoren sind die Produkte der mindestens teilweise abgelaufenen Säure/Base-Reaktion zwischen Aminoverbindungen und Säuren.

Solche Korrosionsinhibitoren können eine Aminoverbindung oder Mischungen von Aminoverbindungen sein, die gegebenenfalls mit einer Säure oder mehreren Säuren neutralisiert sind.

Geeignete Aminoverbindungen und/oder Aminoalkohole sind primäre und/oder sekundäre und/oder tertiäre Amine, in welchen an das Stickstoffatom aliphatische und/oder aromatische und/oder cycloaliphatische Reste gebunden sind oder in denen das Stickstoffatom der Aminoverbindung einen Teil einer heterocyclischen Struktur darstellt und wobei in der Aminoverbindung des Korrosionsinhibitors eine oder mehrere Aminogruppen vorhanden sind. Ebenfalls geeignet sind Aminoalkohole wie primäre, sekundäre oder tertiäre aliphatische Amine, die pro Molekül mindestens eine Alkanolamingruppierung enthalten.

Speziell geeignete Aminoverbindungen resp. Aminoalkohole sind aus der Gruppe ausgewählt, welche die folgenden Amine umfasst:
Cyclohexylamin
Dicyclohexylamin
N-Methyl-cyclohexylamin
N,N-Dimethyl-cyclohexylamin
N-Benzyl-dimethylamin
Hexamethylentetramin
Triethylentetramin
Diethylentriamin
Ethylendiamin
N,N-Dimethylethanolamin
N-Methyl-diethanolamin
Mono-, Di-, Tri-ethanolamin
Piperazin
Morpholin
Guanidin.

Bevorzugte Aminoverbindungen sind N,N-Dimethylethanolamin, N-Methyldiethanolamin sowie Mono-, Di- und Triethanolamin.

Geeignete Säuren für die teilweise Neutralisierung mittels Säure-Base-Reaktion sind einbasische oder mehrbasische anorganische oder organische Säuren, insbesondere solche Säuren, die selbst eine korrosionsvermindernde Wirkung aufweisen und/oder eine betonverflüssigende Wirkung besitzen. Speziell geeignete Säuren sind solche, die mit Calciumionen schwer lösliche oder unlösliche Verbindungen oder Komplexe oder Chelate bilden. Speziell geeignete Säuren sind
Phosphorsäure
Pyrophosphorsäure
Phosphonsäuren
Benzoesäure
Capronsäure
Caprylsäure
Oenanthsäure
Aminobenzoesäure
Sulfanilsäure
Salicylsäure
Sebazinsäure
Oelsäure
Linolsäure
Adipinsäure
Tetrahydroxiadipinsäure
Milchsäure
Weinsäure
Citronensäure
Glukonsäure
Glukoheptonsäure
Heptonsäure und
Ascorbinsäure.

Bevorzugte Säuren sind Phosphonsäuren, Benzoesäure, Milchsäure, Glukonsäure, Glukoheptonsäure, Oenanthsäure und Caprylsäure.

Die Konzentration an Aminoverbindung oder Hydroxiaminoverbindung liegt üblicherweise im Bereich von 0,2 Gew.-% - 2 Gew.-%, vorzugsweise um ca. 0,6 Gew.-% bezogen auf das Gewicht des Injektionszementes.

Weder die Amine noch deren salzartige Produkte mit Säuren beeinträchtigen die Stabilität der Injektionszement-Suspension oder deren Abbindeverhalten resp. die Endfestigkeit der Reparatur-Stelle oder die Haftung an den Wänden des abgedichteten Risses.

Ein bevorzugter Micro-Zement ist oder enthält Portland-Zement.

Weitere wahlweise anwesende Zusatzstoffe sind abbindereduzierende und/oder verflüssigende und/oder thixotropierende und/oder expansiv wirkende Zusätze. Solche Zusätze sind dem Fachmann bekannt.

Der erfindungsgemässe korrosionsinhibierende Injektionszement weist gegenüber bekannten Verfahren der Korrosionsinhibierung, beispielsweise durch Einbringen eines Korrosionsinhibitors auf einem festen Träger in zuvor anzufertigende Bohrlöcher, wesentliche Vorteile auf. Jegliche mechanische Bearbeitung der Baukonstruktion entfällt, da der Injektionszement direkt in bereits vorhandene Risse oder über im Bauwerk bereits verlegte perforierte Injektionsschläuche appliziert wird. Durch die Injektion des korrosionsinhibierenden Injektionszementes direkt in Risse, gelangt der Korrosionsinhibitor auf direktem Wege zu den am meisten gefährdeten Stellen und entfaltet somit seine primäre Wirkung dort wo sie am wesentlichsten ist. Durch die ausserordentlich gute Penetration des Korrosionsinhibitors wird gleichzeitig ein Korrosionsschutz auch an relativ weit von solchen Applikationsorten entfernten Stellen erzielt.

Neben der Verwendung zur Instandsetzung von Bauwerken mit Armierungseisen eignet sich der erfindungsgemässe Injektionszement zur Injektion der Hüllrohre bei vor- und/oder nachgespanntem Beton. Bei der Sanierung von Bauwerken kann der Injektionszement gemischt mit Wasser direkt oder über perforierte Injektionsschläuche oder - profile injiziert werden.

### Beispiel 1

Die Penetration des Korrosionsinhibitors wurde an einem ausgehärteten Mörtelwürfel mit den Massen 20x20x12 cm geprüft. Die Mörtelzusammensetzung war

| | |
|---|---|
| CEN Sand | 4050 g |
| Portlandzement | 1500 g |
| Wasser/Zement Faktor | 0.49 |

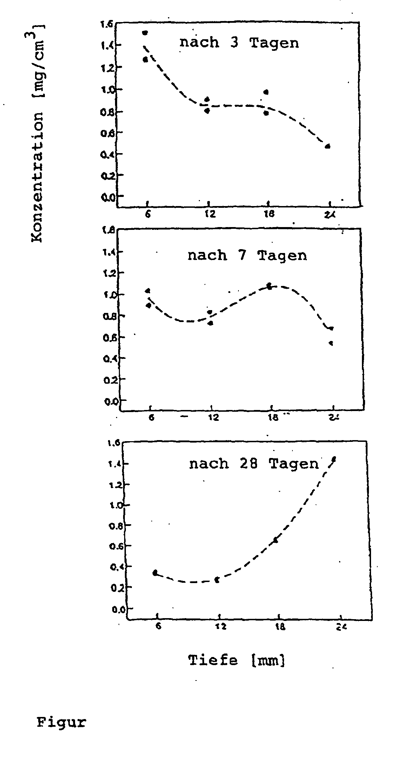

Der Inhibitor wurde in reiner Form auf die Mörteloberfläche aufgebracht, nach 3, 7 und 28 Tagen wurden 2 mm Löcher gebohrt und der Bohrstaub auf die Anwesenheit des Korrosionsinhibitors geprüft. Die Untersuchungen wurden am Institut für Radiochemie an der Universität Heidelberg sowie im Kernforschungszentrum Karlsruhe durchgeführt. Als Untersuchungsmethode wurde SNMS (Secondary Neutron Mass Spectroscopy) angewendet. Die Penetrationstiefe des Inhibitors nach 3, 7 und 28 Tagen ist in Figur 1 dargestellt.

Durch Zugabe eines Korrosionsinhibitors zum Injektionsbindemittelgemisch kann eine weitere Korrosion der Armierung im Bauwerk gestoppt oder verzögert werden. Der Korrosionsinhibitor kann bereits im Bindemittel vorgemischt oder erst vor der Anwendung zugesetzt werden. Unerwünschte Nebeneigenschaften treten dabei nicht auf, der Mischvorgang und die Einpressmethode werden nicht komplizierter und die Wirtschaftlichkeit ist ebenfalls gegeben.

### Beispiel 2

Der Einfluss des Korrosionsinhibitors auf die Verarbeitbarkeit des Injektionszementes wurde untersucht, indem die Ausflusszeiten aus einem MARSH-Trichter bei einem Wassergehalt von 65 Gew.-% bezogen auf das Zementgewicht (bZ) und unter Zusatz von 3 Gew.-% (bZ) eines Verflüssigers ohne und mit 3 Gew.-% (bZ) wässriger Korrosionsinhibitor-Lösung (Die Lösung enthält 20 % Dimethylethanolamin neutralisiert mit Milchsäure) nach verschiedenen Zeiten bestimmt wurde.

Die Resultate sind in der nachfolgenden Tabelle aufgeführt:

| Zeit nach Anmischen in Minuten | Ausflusszeit in Sekunden | |
|---|---|---|
| | ohne Inhibitor | mit Inhibitor |
| 0 | 44 | 45 |
| 60 | 49 | 50 |

Der Korrosionsinhibitor verändert die Viskosität des Injektionszementslurrys nicht.

## Patentansprüche

1. Injektionszement, der ein ultrafeines, mineralisches Injektionsmittel ist, in dem Micro-Zement mit Wasser und Zusatzmitteln hochtourig kolloidal aufgemischt wird, **dadurch gekennzeichnet, dass** er als ein Zusatzmittel mindestens einen Korrosionsinhibitor enthält, der eine Amino- und/oder Hydroxiaminoverbindung umfasst.

2. Injektionszement gemäss Anspruch 1, **dadurch gekennzeichnet, dass** er als Micro-Zement Portland-zement oder eine Mischung von Portlandzement mit hydraulischen, latent hydraulischen und/oder inerten Zusätzen enthält.

3. Injektionszement gemäss Anspruch 1 oder 2, **dadurch gekennzeichnet, dass** er die Amino- und/oder Hydroxiaminoverbindung in einer Menge von 0,2 - 2 Gew.-% bezogen auf das Gewicht des Zementes enthält.

4. Injektionszement gemäss einem der Ansprüche 1 bis 3, **dadurch gekennzeichnet, dass** die mindestens eine Amino- und/oder Hydroxiaminoverbindung ausgewählt ist aus der Gruppe bestehend aus
Cyclohexylamin
Dicyclohexylamin
N-Methyl-cyclohexylamin
N,N-Dimethyl-cyclohexylamin
N-Benzyl-dimethylamin
Hexamethylentetramin
Triethylentetramin
Diethylentriamin
Ethylendiamin
N,N-Dimethylethanolamin
N-Methyl-diethanolamin
Mono-, Di-, Tri-ethanolamin
Piperazin
Morpholin und
Guanidin.

5. Injektionszement gemäss einem der Ansprüche 1 bis 4, **dadurch gekennzeichnet, dass** die Amino- und/oder Hydroxiaminoverbindung ausgewählt ist aus der Gruppe bestehend aus N,N-Dimethylethanolamin, N-Methyl-diethanolamin, Mono-, Di-, Triethanolamin.

6. Injektionszement gemäss einem der Ansprüche 1 bis 5, **dadurch gekennzeichnet, dass** die Amino- und/oder Hydroxiaminoverbindung teilweise oder vollständig mit einer Säure neutralisiert ist.

7. Injektionszement gemäss Anspruch 6, **dadurch gekennzeichnet, dass** die Säure ausgewählt ist aus der Gruppe bestehend aus
Phosphorsäure
Pyrophosphorsäure
Phosphonsäuren
Benzoesäure
Capronsäure
Caprylsäure
Oenanthsäure
Aminobenzoesäure
Sulfanilsäure
Salicylsäure
Sebazinsäure
Oelsäure
Linolsäure
Adipinsäure
Tetrahydroxiadipinsäure
Milchsäure
Weinsäure
Citronensäure
Glukonsäure
Glukoheptonsäure
Heptonsäure und
Ascorbinsäure.

8. Injektionszement gemäss Anspruch 6 oder 7, **dadurch gekennzeichnet, dass** die Säure ausgewählt ist aus der Gruppe bestehend aus Phosphonsäuren, Benzoesäure, Milchsäure, Glukonsäure, Glukoheptonsäure, Oenanthsäure, Caprylsäure.

9. Injektionszement gemäss einem der Ansprüche 1 bis 8, **dadurch gekennzeichnet, dass** er abbindereduzierende und/oder verflüssigende und/oder thixotropierende und/oder expansiv wirkende Zusätze enthält.

10. Verfahren zur Herstellung eines Injektionszements gemäss einem der Ansprüche 1 bis 9, **dadurch gekennzeichnet, dass** der Korrosionsinhibitor vor oder nach dem Mahlen des Zementes zugemischt wird.

11. Verfahren zur Herstellung eines Injektionszements gemäss einem der Ansprüche 1 bis 9, **dadurch gekennzeichnet, dass** der Korrosionsinhibitor kurz vor der Verwendung des Injektionszements zugemischt wird.

12. Verwendung des Injektionszementes gemäss einem der Ansprüche 1 bis 9, **dadurch gekennzeichnet, dass** er gemischt mit Wasser direkt oder über perforierte Injektionsschläuche oder -profile injiziert wird.

13. Verwendung des Injektionszementes gemäss einem der Ansprüche 1 bis 9 zur Instandsetzung von Bauwerken mit Armierungseisen.

14. Verwendung des Injektionszementes gemäss einem der Ansprüche 1 bis 9 zur Injektion der Hüllrohre bei vor- und/oder nachgespanntem Beton.

## Claims

1. Injection cement that is an ultra-fine, mineralic injection agent in which micro cement is colloidally mixed with water and additives at high speed, **characterized in that** it comprises as an additive at least one corrosion inhibitor that comprises an amino compound or a hydroxyamino compound.

2. Injection cement according to claim 1, **characterized in that** the micro cement is Portland cement or a mixture of Portland cement with hydraulic, latent-hydraulic and/or inert compounds.

3. Injection cement according to claim 1 or 2, **characterized in that** it comprises the amino compound and/or hydroxyamino compound in an amount of 0.2 - 2 % per weight referred to the weight of the cement.

4. Injection cement according to one of claims 1 to 3, **characterized in that** the at least one amino compound and/or hydroxyamino compound is selected from the group consisting of
cyclohexylamine
dicyclohexylamine
N-methyl cyclohexylamine
N,N-dimethyl cyclohexylamine
N-benzyl dimethylamine
hexamethylenetetramine
triethylenetetramine
diethylenetriamine
ethylenediamine
N,N-dimethyl ethanolamine
N-methyl diethanolamine
mono-, di-, tri-ethanolamine
piperazine
morpholine and
guanidine.

5. Injection cement according to one of claims 1 to 4, **characterized in that** the amino compound and/or hydroxyamino compound is selected from the group consisting of N,N-dimethyl ethanolamine, N-methyl diethanolamine, monoethanolamine, diethanolamine, triethanolamine.

6. Injection cement according to one of claims 1 to 5, **characterized in that** the amino compound and/or hydroxyamino compound is partially or completely neutralised with an acid.

7. Injection cement according to claim 6, **characterized in that** the acid is selected from the group consisting of
phosphoric acid
pyrophosphoric acid
phosphonic acids
benzoic acid
caproic acid
caprylic acid
enanthic (heptanoic) acid
aminobenzoic acid
sulfanilic acid
salicylic acid
sebacic acid
oleic acid
linoleic acid
adipic acid
tetrahydroxi adipic acid
lactic acid
tartaric acid
citric acid
gluconic acid
glucoheptonic acid
heptonic acid and
ascorbic acid.

8. Injection cement according to claim 6 or 7, **characterized in that** the acid is selected from the group consisting of phosphonic acid, benzoic acid, lactic acid, gluconic acid, glucoheptonic acid, enanthic (heptanoic) acid, caprylic acid.

9. Injection cement according to one of claims 1 to 8, **characterized in that** it comprises setting reducing and/or water-reducing and/or thixotropic and/or expansive acting additives.

10. Method for the production of an injection cement according to one of claims 1 to 9, **characterized in that** the corrosion inhibitor is admixed prior or after the grinding of the cement.

11. Method for the production of an injection cement of one of claims 1 to 9, **characterized in that** the corrosion inhibitor is admixed shortly before the application of the injection cement.

12. Use of the injection cement of one of claims 1 to 9, **characterized in that** it is, mixed with water, injected directly or via perforated injection hoses or injection profiles.

13. Use of the injection cement of one of claims 1 to 9 for the restoration of buildings with iron reinforcements.

14. Use of the injection cement of one of claims 1 to 9 for injecting the encasing tubes of prestressed and/or subsequently stressed concrete.

## Revendications

1. Ciment d'injection, qui est un agent d'injection minéral ultra-fin dans lequel du microciment est mélangé colloïdalement à grande vitesse à de l'eau et à des additifs, **caractérisé en ce qu'**il contient comme additif au moins un inhibiteur de corrosion qui comprend une amine et/ou une hydroxylamine.

2. Ciment d'injection suivant la revendication 1, **caractérisé en ce qu'**il contient comme microciment du ciment de Portland ou un mélange de ciment de Portland à des additifs hydrauliques, hydrauliques latents et/ou inertes.

3. Ciment d'injection suivant la revendication 1 ou 2, **caractérisé en ce qu'**il comprend une amine et/ou une hydroxylamine en une quantité représentant de 0,2 à 2 % du poids du ciment.

4. Ciment d'injection suivant l'une des revendications 1 à 3, **caractérisé en ce que** la au moins une amine et/ou hydroxylamine est sélectionnée dans le groupe constitué de :
la Cyclohexylamine,
la dicyclohexylamine,
la N-méthyl-cyclohexylamine,
la N,N-diméthyl-cyclohexylamine,
la N-benzyl-diméthylamine,
l'hexaméthylènetétramine,
la triéthylèntétramine,
la diéthylènetriamine,
l'éthylénediamine,
la N,N-diméthyléthanolamine,
la N-méthyl-diéthanolamine,
la monoéthanolamine,
la diéthanolamine,
la triéthanolamine,
la pipérazine,
la morpholine, et
la guanidine.

5. Ciment d'injection suivant l'une des revendications 1 à 4, **caractérisé en ce que** l'amine et/ou l'hydroxylamine est choisie dans le groupe constitué de la N,N diméthyléthanolamine, de la N-méthyl-diéthanolamine, de la monoéthanolamine, de la diéthanolamine et de la triéthanolamine.

6. Ciment d'injection suivant l'une des revendications 1 à 5, **caractérisé en ce que** l'amine et/ou l'hydroxylamine est neutralisée partiellement ou entièrement par un acide.

7. Ciment d'injection suivant la revendication 6, **caractérisé en ce que** l'acide est sélectionné dans le groupe constitué de :
l'acide phosphorique,
l'acide pyrophosphorique,
les acides phosphoniques,
l'acide benzoïque,
l'acide caproïque,
l'acide caprylique,
l'acide oenantique,
l'acide aminobenzoïque,
l'acide sulphanilique,
l'acide salicylique,
l'acide cébacique,
l'acide oléique,
l'acide linoléique,
l'acide adipique,
l'acide tétrahydroxyadipique,
l'acide lactique,
l'acide tartrique,
l'acide citrique,
l'acide gluconique,
l'acide glucoheptonique,
l'acide heptonique, et
l'acide ascorbique.

8. Ciment d'injection suivant la revendication 6 ou 7, **caractérisé en ce que** l'acide est sélectionné dans le groupe constitué des acide phosphonique, de l'acide benzoïque, de l'acide lactique, de l'acide gluconique, l'acide glucoheptonique, de l'acide oenantique, de l'acide caprylique.

9. Ciment d'injection suivant l'une des revendications 1 à 8, **caractérisé en ce qu'**il contient des additifs réduisant la prise, et/ou de fluidification et/ou thixotrope, et/ou à effet d'expansion.

10. Procédé de préparation d'un ciment d'injection suivant l'une des revendications 1 à 9, **caractérisé en ce qu'**il consiste à ajouter l'inhibiteur de corrosion avant ou après le broyage du ciment.

11. Procédé de préparation d'un ciment d'injection suivant l'une des revendications 1 à 9, **caractérisé en ce qu'**il consiste à ajouter l'inhibiteur de corrosion peu avant l'utilisation du ciment d'injection.

12. Utilisation du ciment d'injection suivant l'une des revendications 1 à 9, **caractérisé en ce qu'**il est injecté, mélangé à de l'eau directement ou par des tuyaux souples ou des profilés perforés d'injection.

13. Utilisation du ciment d'injection suivant l'une des revendications 1 à 9, pour la réparation d'ouvrages ayant des fers d'armature.

14. Utilisation du ciment d'injection suivant l'une des revendications 1 à 9 pour l'injection des gaines pour du béton précontraint et/ou postcontraint.
